Europäisches Patentamt

European Patent Office

Office européen des brevets

(19)

(11) Numéro de publication: **0 116 792**

**A1**

# (12) DEMANDE DE BREVET EUROPEEN

(21) Numéro de dépôt: 83402359.0

(22) Date de dépôt: 06.12.83

(51) Int. Cl.³: **H 04 N 9/47**
**H 04 N 9/46**

(30) Priorité: **10.12.82 FR 8220772**

(43) Date de publication de la demande:
**29.08.84 Bulletin 84/35**

(84) Etats contractants désignés:
**AT CH DE FR GB IT LI NL**

(71) Demandeur: THOMSON-CSF
173, Boulevard Haussmann
F-75379 Paris Cedex 08(FR)

(72) Inventeur: Douziech, Patrick
THOMSON-CSF SCPI 173, bld Haussmann
F-75379 Paris Cedex 08(FR)

(72) Inventeur: Imbert, Michel
THOMSON-CSF SCPI 173, bld Haussmann
F-75379 Paris Cedex 08(FR)

(74) Mandataire: Ruellan, Brigitte et al,
THOMSON-CSF SCPI 173, boulevard Haussmann
F-75379 Paris Cedex 08(FR)

(54) **Procédé et dispositif de mise en phase d'une horloge à demi-fréquence ligne dans un téléviseur couleur PAL ou SECAM.**

(57) La présente invention concerne un circuit adapté à un système de décodage de signaux de chrominance en télévision couleur PAL ou SECAM pour fournir un signal en créneaux de fréquence égale à la moitié de la fréquence ligne et dont les 0 et les 1 correspondent de façon déterminée à la nature des informations contenues sur des lignes successives respectives. Ce circuit comprend un commutateur (10) orientant vers l'une ou l'autre de ses sorties A ou B le signal de salve échantillonné et démodulé. Une porte OU Exclusif (20) fournit, en fonction du résultat de la comparaison des valeurs apparaissant sur les voies A et B, un signal $F_L/2$ à la demi-fréquence ligne correspondant à la sortie d'une bascule (15) ou à l'inverse de cette sortie.

Fig.5

Croydon Printing Company Ltd.

PROCEDE ET DISPOSITIF DE MISE EN PHASE D'UNE HORLOGE A DEMI-
FREQUENCE LIGNE DANS UN TELEVISEUR COULEUR PAL OU SECAM.

La présente invention concerne le domaine des circuits de télévision couleur et, plus particulièrement, des circuits de décodage de chrominance.

La présente invention s'applique notamment aux émissions télévisées transmises selon les normes SECAM ou PAL.

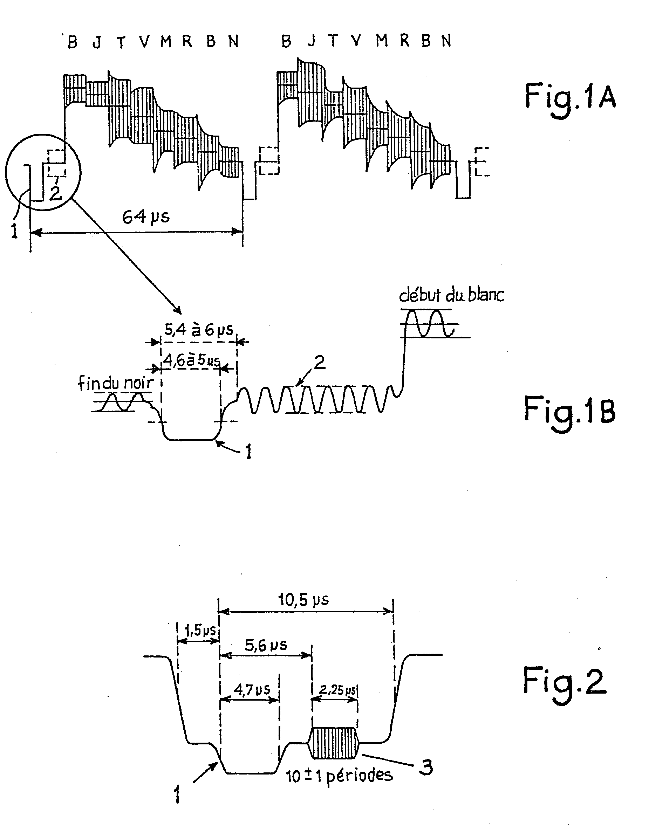

A titre de rappel, la figure 1A représente la structure de deux lignes successives transmises dans un système de télévision couleur de type SECAM dans le cas où l'émetteur fournit l'image d'une mire de barres verticales colorées, la barre de gauche étant blanche et celle de droite noire. Pour chaque couleur on observe la superposition d'un signal continu portant une information de luminance et d'un signal alternatif dont la modulation porte une information de chrominance.

Dans un système où le nombre de lignes transmises est de 625 lignes par image, la durée d'une ligne est de 64 microsecondes. Dans cette durée totale, la première partie correspondant au "retour ligne" et qui est représentée plus en détail en figure 1B, comprend successivement une impulsion de synchronisation 1 suivie d'une salve d'identification de chrominance 2. Dans le système SECAM, deux lignes successives contiennent respectivement des informations R − Y représentatives du rouge, puis des informations B − Y représentatives du bleu. Ces informations sont contenues dans la modulation en fréquence d'une sous-porteuse qui est distincte pour deux lignes successives (4,406 MHz pour le rouge et 4,250 MHz pour le bleu). Les salves 2 sont alternativement aux fréquences 4,406 et 4,250 MHz et permettent donc d'indiquer si l'on aura affaire à une "ligne rouge" ou à une "ligne bleue". Bien entendu, ces appellations "ligne rouge" et "ligne bleue" utilisées ici traduisent un souci de simplification et l'on pourra se reporter à tout ouvrage classique sur le système SECAM pour définir de façon précise le contenu des informations de chrominance portées par des lignes successives.

2

Dans le téléviseur, on aura donc besoin d'identifier des lignes rouges ou des lignes bleues. Pour cela, il faut produire un signal électrique présentant des caractéristiques distinctes pendant les lignes rouges et pendant les lignes bleues, par exemple un signal en créneaux présentant un niveau haut ou niveau 1 pendant les lignes rouges et un niveau bas ou niveau 0 pendant les lignes bleues.

Le même problème se pose dans les systèmes de télévision couleur de type PAL. La figure 2 représente l'intervalle de retour ligne pour un signal de télévision couleur de type PAL. Comme dans le cas du système SECAM, on retrouve une impulsion de synchronisation ligne 1 suivie d'une salve 3. Dans ce cas, la salve 3 est toujours à la même fréquence pour toutes les lignes, mais c'est sa phase qui varie alternativement pour chaque ligne successive et qui indique que la ligne à venir contient des informations de chrominance d'un premier type ou d'un deuxième type qu'il faut également identifier de façon déterminée. Ainsi, comme dans le cas du SECAM, il faudra par exemple produire à l'intérieur du téléviseur des signaux en créneaux dont le niveau 1 indique une ligne du premier type et le niveau 0 une ligne du deuxième type.

On peut facilement fournir dans un téléviseur, à partir des signaux de synchronisation de ligne des créneaux ayant successivement des niveaux 1 et des niveaux 0 pour des lignes alternées.

La présente invention concerne plus particulièrement les dispositifs permettant de "mettre en phase" ces créneaux pour que leurs niveaux haut et bas correspondent à des lignes de nature choisie (lignes bleues ou lignes rouges en SECAM, lignes du premier type ou lignes du deuxième type en PAL). Dans tout le présent texte, on entendra par "mise en phase" cette opération : il ne s'agit pas d'une mise en phase fine, mais du choix entre deux signaux déphasés de 180° (en opposition de phase).

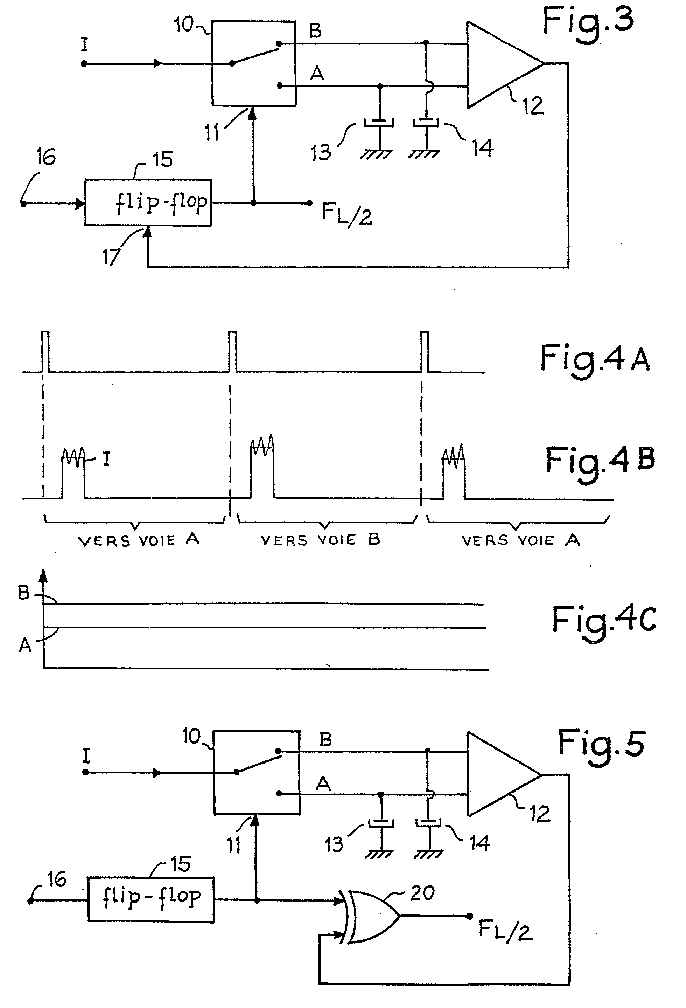

Un exemple de circuit de mise en phase classique va d'abord être décrit en relation avec la figure 3. Des informations plus détaillées sur ce circuit classique pourront être trouvées dans la notice sur le circuit TEA 5630, Thomson-Efcis. Ce circuit de mise en phase du signal à fréquence $F_L/2$ (demi-fréquence ligne) comprend un commutateur 10 à une entrée et deux sorties (voie A et voie B) comprenant une borne de commande de commutation 11 ; un comparateur 12 recevant sur chacune de ses entrées l'une des sorties du commutateur, des moyens de mémorisation symbolisés par des condensateurs 13 et 14 associés à chacune des sorties du commutateur ; et une bascule 15 recevant à son entrée 16 des signaux de synchronisation de lignes et changeant d'état à chaque apparition d'un signal de synchronisation de lignes pour fournir un signal de sortie de fréquence $F_L/2$. Cette bascule comprend également une entrée de remise à zéro 17 et sa sortie est connectée à l'entrée de commande 11 du commutateur 10.

Le circuit de la figure 3 fonctionne de la façon suivante. L'entrée 16 de la bascule 15 reçoit des impulsions de synchronisation ligne telles que représentées en figure 4A. L'entrée du commutateur 10 reçoit un échantillon du signal de ligne prélevé pendant la durée de la salve et démodulé. Il est possible de prélever cet échantillon en se basant sur un créneau temporel décalé par rapport au signal de synchronisation. Dans le cas du système SECAM, la "démodulation" est effectuée par un discriminateur qui fournit un niveau de tension plus ou moins élevé selon la fréquence du signal de salve. Dans le cas du système PAL, la "démodulation" provient de la comparaison entre la phase d'un signal de référence généré dans le téléviseur et la phase de la salve. On obtient également un signal plus ou moins intense selon le déphasage. La figure 4B représente l'allure des signaux d'entrée dont l'intensité varie d'un échantillon à l'autre comme le montrent leurs niveaux en pointillés, mais qui peuvent être fortement entachés de bruit selon les conditions de réception. Le commutateur aiguille alternativement pour chaque ligne les signaux vers la voie A ou vers la voie B. Ainsi, par exemple, arrivent sur la voie A tous les signaux les moins intenses et sur la voie B tous les signaux les plus intenses (figure 4C). Une mémorisation est effectuée par les condensateurs 13 et 14 et l'on obtient ainsi un niveau bas sur la voie A et un niveau haut sur la voie B. On notera que cette mémorisation doit être relativement longue, par exemple de l'ordre de quelques dizaines de lignes pour supprimer

4

les effets liés au bruit et permettre une comparaison entre des niveaux stables. Le comparateur 12 fournit un niveau de sortie nul quand le niveau de la voie B est supérieur au niveau de la voie A et un niveau 1 quand le niveau sur la voie B est inférieur au niveau sur la voie A. Si la sortie du comparateur est à 0, aucune action n'est exercée sur la borne de remise à 0 17 de la bascule 15. Si, par contre, le niveau sur la voie A est supérieur au niveau sur la voie B, le comparateur 12 a une sortie à 1 qui agit sur l'entrée de remise à zéro de la bascule 15. Le commutateur 10 est alors bloqué dans une position qui correspond au 0 de la bascule, et y reste jusqu'à l'apparition d'une ligne correspondant à cet état. Le condensateur sollicité doit alors acquérir la charge nécessaire pour faire basculer le comparateur 12 vers l'état 0 et supprimer la remise à zéro.

On obtient donc ainsi à la sortie de la bascule 15, une sortie $F_L/2$ qui présente une corrélation de phase avec le contenu des signaux de salve.

Ce circuit classique représenté en figure 3 présente des inconvénients qui résultent essentiellement du fait que le système est bouclé. En effet, l'état de la bascule 15 impose les niveaux sur les condensateurs 13 et 14 qui conditionnent l'état du comparateur 12, qui, à son tour, commande l'état de la bascule 15. A l'intérieur de cette boucle, les constantes de temps liées aux condensateurs 13 et 14 doivent être suffisamment faibles pour permettre la remise en phase. Par ailleurs, une bonne immunité au bruit nécessite des constantes de temps longues.

Le choix des valeurs des condensateurs 13 et 14 est donc critique et fait appel à un compromis.

La présente invention a pour objet principal de prévoir un nouveau circuit de mise en phase d'un signal à demi-fréquence ligne permettant une mise en phase plus rapide et moins sujette à erreurs que celle du circuit classique décrit précédemment.

Pour atteindre ces objets ainsi que d'autres, la présente invention prévoit un procédé, adapté à un système de décodage de signaux de chrominance en télévision couleur PAL ou SECAM, pour fournir un signal en créneaux de fréquence égale à la moitié de la

5

fréquence ligne dont les 0 et les 1 correspondent de façon déterminée à la nature des informations contenues sur les lignes successives respectives. Le signal de salve échantillonné et démodulé
est appliqué à un commutateur à une entrée et deux sorties
aiguillant le signal d'entrée vers l'une ou l'autre des sorties au
rythme d'une bascule commutant à la demi-fréquence ligne et dont
la phase est indépendante du contenu des signaux de salve, les
signaux de sortie étant soumis à un effet de moyenne et appliqués
aux deux entrées d'un comparateur. Le signal de sortie de la
bascule est appliqué directement au commutateur et est par
ailleurs transmis par l'intermédiaire d'un circuit logique,
l'inversant ou non, selon la sortie du comparateur. De préférence,
le circuit logique est constitué d'une porte OU Exclusif.

Ces objets, caractéristiques et avantages ainsi que
d'autres de la présente invention seront exposés plus en détail
dans la description suivante d'un mode de réalisation particulier
faite en relation avec les figures jointes parmi lesquelles :

    - les figures 1 à 4 destinées à illustrer l'état de la
technique ont été décrites précédemment,

        - la figure 5 représente sous forme de blocs, un schéma
de circuit selon la présente invention.

Dans cette figure, on a utilisé de mêmes références
qu'en figure 3 pour désigner des éléments, blocs ou signaux analogues.

On retrouve en figure 5 un commutateur commandé 10 à une
entrée I et deux sorties A et B, des condensateurs de prise de
moyenne 13 et 14, un comparateur 12 et une bascule 15. La
différence essentielle entre le circuit de la figure 5 et celui de
la figure 3 est que, en figure 5, le commutateur 10 est commandé
directement par la sortie de la bascule 15, cette sortie n'étant
pas liée au niveau des sorties A et B du commutateur. La sortie de
la bascule 15 est également dirigée vers une première entrée d'une
porte OU Exclusif 20 dont la deuxième entrée reçoit la sortie du
comparateur 12. Le signal à la demi-fréquence ligne présentant une
relation avec les niveaux A et B à la sortie du commutateur 10 est
obtenu à la sortie de cette porte OU Exclusif. En effet, si la sortie du comparateur 12 est à 0 indiquant que le niveau de la voie B est supérieur au niveau sur la voie A, la sortie $F_L/2$ de la porte OU Exclusif reproduit la sortie de la bascule 15. Par contre, si la sortie du comparateur 12 est à 1, indiquant que le niveau de la voie B est inférieur au niveau de la voie A, la sortie du comparateur 12 est à 1 et la sortie de la porte OU Exclusif est inversée par rapport à la sortie de la bascule 15.

Ainsi, selon la présente invention, on ne cherche pas à modifier l'aiguillage du commutateur 10 pour que l'on ait toujours sur la voie B par exemple le niveau le plus élevé et sur la voie A le niveau le plus faible. Les niveaux apparaissant sur les voies A et B sont purement arbitraires et dépendent de la relation de phase accidentelle qui existe entre la sortie de la bascule 15 et les variations de niveau de signal de salve démodulé relatif à chaque ligne. Par contre, le signal $F_L/2$ présentant une relation de phase déterminée avec la nature de chaque ligne apparaît à la sortie de la porte OU Exclusif 20.

Les avantages du circuit selon la présente invention sont notamment que l'on peut obtenir plus rapidement et de façon plus sûre un rattrapage du signal d'identification de chrominance et que la valeur de capacité de chacun des condensateurs 13 et 14 peut être choisie uniquement en fonction de la constante de temps désirée pour l'obtention d'un effet de moyenne optimal, ce qui n'était pas le cas pour les dispositifs de l'art antérieur comme on l'a exposé précédemment.

7

REVENDICATIONS.

1. Procédé, adapté à un système de décodage de signaux de chrominance en télévision couleur PAL ou SECAM, pour fournir un signal en créneaux de fréquence égale à la moitié de la fréquence ligne dont les 0 et les 1 correspondent de façon déterminée à la nature des informations contenues sur des lignes successives respectives, dans lequel le signal de salve échantillonné et démodulé est appliqué à un commutateur (10) à une entrée et deux sorties aiguillant le signal d'entrée au rythme d'une bascule commutant à la demi-fréquence ligne et dont la phase est indépendante du contenu des signaux de salve, les signaux de sortie étant soumis à un effet de moyenne et appliqués aux deux entrées d'un comparateur (12), caractérisé en ce qu'il consiste à appliquer directement le signal de la bascule au commutateur et à transmettre ce signal par l'intermédiaire d'un circuit logique (20) l'inversant ou non selon la sortie du comparateur.

2. Procédé selon la revendication 1, caractérisé en ce que le circuit logique est une porte OU Exclusif (20) recevant sur sa première entrée la sortie de la bascule (15) et sur sa deuxième entrée la sortie du comparateur (12), la sortie de cette porte OU fournissant le signal en créneaux à la demi-fréquence ligne $F_L/2$.

3. Circuit, adapté à un système de décodage de signaux de chrominance en télévision couleur PAL ou SECAM, pour fournir un signal en créneaux de fréquence égale à la moitié de la fréquence ligne dont les 0 et les 1 correspondent de façon déterminée à la nature des informations contenues sur des lignes successives, comprenant : un commutateur (10) à une entrée et deux sorties recevant le signal de salve échantillonné et démodulé et l'appliquant vers l'une ou l'autre de ses sorties au rythme d'une bascule (15) commutant à la demi-fréquence ligne indépendamment du contenu des signaux de salve ; des moyens permettant une prise de moyenne connectée aux deux sorties de ce commutateur ; un comparateur (12) comparant les deux signaux moyennés ; caractérisé en

8

ce qu'il comprend en outre une porte OU Exclusif (20) recevant à sa première entrée la sortie de la bascule (15) et à sa deuxième entrée la sortie du comparateur (12), le signal de sortie de la bascule (15) étant directement appliqué au commutateur (12) pour l'actionner.

4. Circuit selon la revendication 3, caractérisé en ce que les moyens de prise de valeur moyenne sont des condensateurs (13, 14).

B J T V M R B N    B J T V M R B N

64 µs

Fig.1A

début du blanc

5,4 à 6 µs

4,6 à 5 µs

fin du noir

2

1

Fig.1B

10,5 µs

1,5 µs

5,6 µs

4,7 µs

2,25 µs

10 ± 1 périodes

1

3

Fig.2

0116792

2/2

Fig.3

I

10

11

B

A

12

13    14

16

15

flip-flop

17

FL/2

Fig.4A

I

Fig.4B

VERS VOIE A          VERS VOIE B          VERS VOIE A

B

A

Fig.4C

Fig.5

I

10

11

B

A

12

13    14

16

15

flip-flop

20

FL/2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 408 960 (THOMSON-CSF) <br> * Page 9, ligne 15 - page 11, ligne 17 * | 1-4 | H 04 N 9/47 <br> H 04 N 9/46 |
| | --- | | |
| Y | FR-A-2 133 690 (PHILIPS) <br> * Page 22, ligne 15 - page 23, ligne 9 * | 1,3,4 | |
| | --- | | |
| Y | THE ELECTRONIC ENGINEER'S DESIGN MAGAZINE, vol. 12, no. 6, mai 1967, pages 78-81, Denver, US "The neglected exclusive OR" * Page 79, colonne de droite, lignes 15-19 * | 2,3 | |
| | ----- | | |

**DOMAINES TECHNIQUES RECHERCHES (Int. Cl. ³)**

H 04 N

Le présent rapport de recherche a été établi pour toutes les revendications

| Lieu de la recherche <br> LA HAYE | Date d'achèvement de la recherche <br> 16-05-1984 | Examinateur <br> CRISTOL Y. |
|---|---|---|